# EUROPEAN PATENT APPLICATION

(11) **EP 1 482 226 A1**
(43) Date of publication of application: **01.12.2004**
(21) Application number: 04015111.0
(22) Date of filing: 07.10.1999
(51) Int. Cl.: F16K 31/08

(54) **Magnetic drive**

(30) Priority: 08.10.1998 GB 9821842; 01.04.1999 GB 9907552; 29.05.1999 GB 9912518; 21.06.1999 GB 9914330
(62) Divisional of application: 99949174.9
(71) Applicant: Camcon Limited, Cambridge CB4 4WS (GB)
(72) Inventor: Wygnanski, Wladyslasw, Cambridge CB4 2SL (GB)
(74) Representative: Nash, Keith Wilfrid

(57) **Abstract**

A magnetic drive device is formed from permanent magnet means (12,14) generating magnetic flux between two pairs of poles, armature (10) means mounted for movement enabling it to occupy either a first or second rest position between the poles, and at least one electromagnet winding (36,38) whose axis is generally perpendicular to the path of movement of the armature. When electric current flows in the winding magnetic flux is produced in one direction or the other, depending on the direction of the current. The flux from the energised winding caused the armature either to remain in its current rest position or to move into its other rest position, in which it will continue to remain after the current flow ceases. Resiliently deformable energy storing means is provided which is deformed in response to movement of the armature means as the latter approaches each of its rest positions. This absorbs and stores energy from the final part of the movement of the armature into each rest position, but becomes disengaged from the armature means as the latter moves away from each of its rest positions, so that the armature is unrestricted in its movement once the disengagement occurs. The device can be fitted within a sealed chamber, and can be adapted to control the position of a closure member of a pneumatic or hydraulic valve, or the movable member of an electrical switch, effecting closure or opening of the contacts thereof. The device may be combined with or be adapted to operate, a fluid flow control valve.

## Description

### Field of invention

This invention concerns magnetic drives, particularly but not exclusively for valves for controlling gas flow or fluid flow and for opening and closing electrical switch contacts.

### Background to the invention

Magnetic attraction and repulsion is commonly employed as a motive force to operate devices such as valve closure members, pistons in cylinders to achieve a pumping action, and contactors and switches for opening and closing electrical circuits.

Such drives may have a bistable or monostable characteristic, and often employ a spring force to provide a restoring force and create a monostable operating characteristic.

Magnetic fields to achieve the operation are usually generated by causing an electric current to flow in a winding surrounding a ferromagnetic core or the like, which if the magnetic field is to collapse when the current flow ceases (as is usually required), is usually constructed from a magnetisable material having a low magnetic permanence.

Where valves control the flow of inflammable or poisonous gases or fluids, it is usual to design the magnetic drive therefor to be monostable and to have a so-called fail-safe characteristic in the event of a power failure. By fail-safe is meant that the valve will revert to a closed condition in the event that there is an electrical power failure.

It is a particular object of the present invention to provide a bistable magnetic drive which does not require a continuous current flow to maintain it in either of its stable states.

Another object of the present invention is to provide a magnetic drive having a bistable characteristic, which can be readily modified to possess a monostable characteristic so that it will revert to (or remain in) one of its two states for example in the event of a power failure.

It is a still further object of the invention to provide a digital fluid flow controlling valve, particularly for controlling the flow of gas or air.

It is a still further object of the invention to provide a digitally controllable gas flow control valve with a safety characteristic which reverts to a closed state in the event of the failure of a monitored source of energy such as an electrical current flow, a source of heat, or a source of light.

A further object of the invention is to provide pneumatic devices in which air or gas flow is under the control of valves controlled by such improved magnetic drives.

### Prior art

From US Patents No. 4554610, No. 4386823 and No. 3772540 are known magnetic drive devices having permanent magnet means, an armature displaceable between air gaps and an electromagnetic winding for driving the armature. In all cases, the axis of the winding lies parallel to the path of movement of the armature.

GB 1,513,966 describes electromagnetic switching devices (commonly referred to as relays) in which a magnetic armature is attracted to pairs of poles and is moveable between two home positions in each of which it is held in place by permanent magnetic flux. Movement into its other home position is achieved by temporarily energising an electromagnet to interfere with the permanent magnet flux in such a way as to cause the armature to become repelled from the two poles it was in contact with and to be attracted to the other two poles.

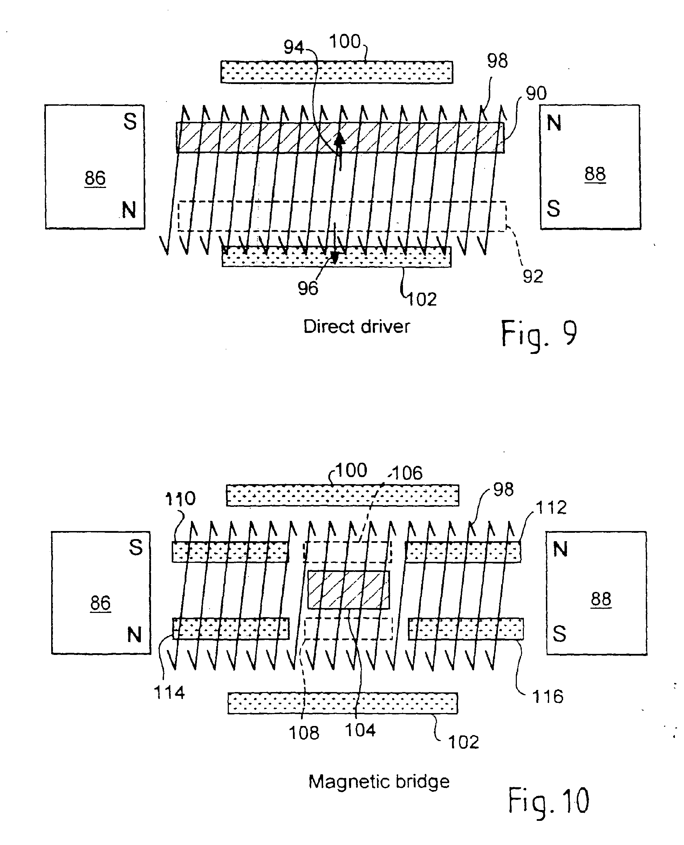

In the Fig 10 embodiment of 1,513,966 the armature simply rocks or pivots between the two home positions as above described.

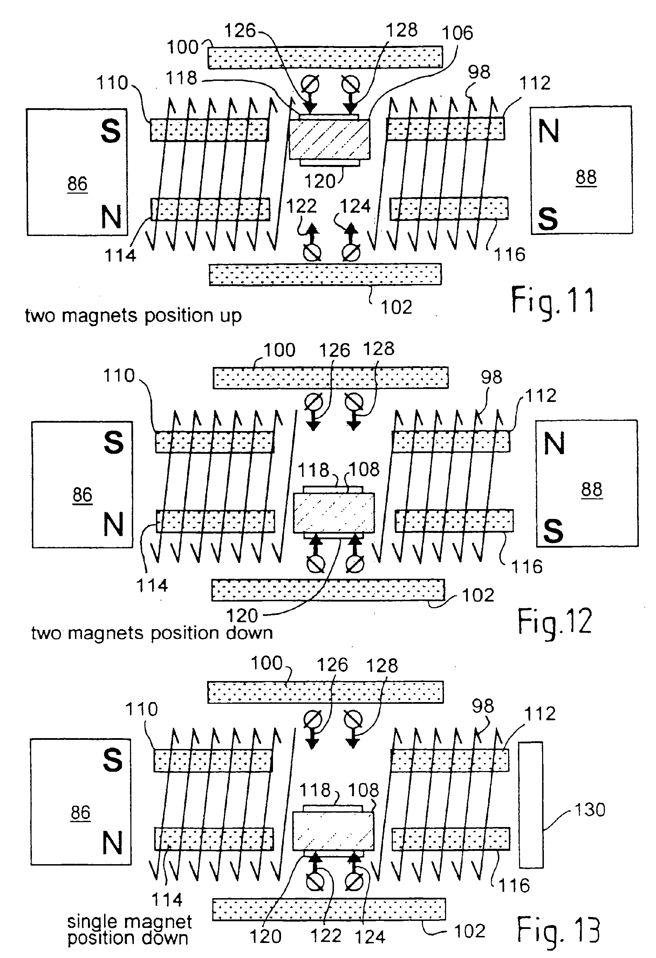

In the Fig 11 embodiment of 1,513,966 springs are mounted between the pole assembly and the armature which centre the armature between its two home positions in the absence of energisation of the electromagnet coil. It is clear from the text that the permanent magnet flux overcomes the spring force acting on the armature only while the coil is energised. The permanent magnet flux merely determines which way the armature will rock for a given polority energising current. It is clear that as soon as the energising current ceases to flow, the springs act to move the armature into its mid-position.

Accordingly although one of the springs stores as potential energy some of the kinetic energy of the armature as it moves into a home position, this potentially energy is immediately converted back to kinetic energy when the energising current ceases to flow, as the stored potential energy causes the armature to revert to its mid-position. The device is therefore a tri-state device which requires energy to keep it in two of its three states, but reverts to its third state when that source of energy is removed.

Nowhere does 1,513,966 teach one to provide a permanent magnetic flux which is sufficient to hold the armature in either of two home positions, thereby conserving the potential energy stored in the spring, to be available to assist in accelerating the armature away from the two poles to which it was previously attracted and pivot into contact with move to the other two poles when a pulse of current of appropriate polarity flows through the electromagnet

### Summary of the invention

According to the present invention a magnetic drive device comprises a permanent magnet means generating magnetic flux between two pairs of poles, armature means mounted for movement enabling it to occupy either a first rest position between one pair of poles or a second rest position between the other pair of poles, and at least one electromagnet winding having an axis generally perpendicular to the path of movement of the armature to which electric current can be supplied to produce a magnetic flux in one direction or the other, depending on the direction of the current, the flux from the energised winding increasing the flux density between two of the poles and decreasing it between the other two, which will cause the armature either to remain in its current rest position, or to move into its other rest position, depending on the direction of current flow in the winding, in which rest position the armature will continue to remain after the current flow ceases, and wherein resiliently deformable energy storing means is provided which is deformed in response to movement of the armature means as the latter approaches each of its rest positions, thereby to absorb and store energy from the final part of the movement of the armature into each rest position. The armature means can become disengaged from the energy storing means as the latter moves away from each of its rest positions.

In one embodiment when energised the winding both polarises the armature, and changes the magnetic flux, in air gaps between the armature and the poles.

A magnetic drive device as aforesaid can further include low reluctance flux concentrating means external to the electromagnet winding which provides a low reluctance external path for returning flux from one end to the other thereof, thereby to increase the flux produced by the winding when energised, so as to magnify the magnetic flux available to effect movement of the armature.

The external flux concentrating means conveniently comprises at least one elongate member of magnetisable material which extends parallel to the magnetic flux produced by the electromagnetic winding when the latter is envisaged and generally perpendicular to the direction of movement of the armature and beyond the extent of its travel.

A magnetic drive device as aforesaid, (with or without the external flux concentrating means) may comprise four similar elongate magnetisable pole pieces arranged symmetrically in pairs, each pair occupying one of the two magnetic fields, wherein the air gap between the pole pieces in each pair defines air gaps at the two extremes of the armature travel, and the two pairs of pole pieces serve to concentrate the internal magnetic flux into the two air gaps at opposite ends of the armature travel.

The combination of internal and external flux concentrating elements assists in defining the two stable positions of the armature and also assists in effecting the movement of the armature from one end to the other.

A pair of electrical contacts may be provided at one end of the armature travel which are electrically joined by being bridged by the armature, or by conductive means or a coating on the armature, when the latter is located at that end of its travel.

Likewise a pair of electrical contacts may be provided at the other end of the travel as well, and if required second conductive means or a coating is provided on the armature to ensure that the said other contacts are also bridged when the armature is at the other end of its travel.

By providing electrical contacts at either one or both ends of the armature travel, the drive is converted into an electrical switch in which one pair of contacts are bridged when the armature is at one end of its travel and the other pair are bridged when it is at the other end of its travel. The converted drive is therefore equivalent to an electromagnetic relay or contactor.

A magnetic drive device as aforesaid may be contained within a sealed chamber.

Where electrical contacts are involved, at least part of the wall of the chamber may be formed from electrical insulating material to provide a region for conductive feedthroughs to terminals external of the chamber to allow electrical connection to be made to the contacts therein which, when the armature is in an appropriate position, are bridged thereby.

The chamber for example may be formed from plastics or glass or quartz.

According to another aspect of the invention, a magnetic drive device as aforesaid may include a further flux concentrator which is movable relative to the drive, so as to adopt a first position relatively close to the drive to reduce the flux density at one end of the armature travel, thereby causing the device to assume a monostable characteristic when the further concentrator is in that position, and is movable out of the first position into a second position where it has little or no influence on the flux density in the drive, to reinstate the bistable characteristic of the drive.

Further flux concentration can be obtained by providing field focusing pole pieces at opposite ends of the permanent magnet, and magnetisable elements at the opposite end of the coil (or at each end of the two permanent magnets where permanent magnets are located at both ends of the coil), wherein the pole pieces extend laterally of each magnet or length of magnetisable material and extend towards the pole pieces and flux concentrating elements located externally of the coil where provided.

In such an arrangement, any said further concentrator which is employed to produce a monostable characteristic in the drive, may also include pole pieces for fitting with small air gaps, between the said field focusing pole pieces and any internal pole pieces, and/or any external concentrator(s), at opposite ends of the coil.

The stored energy in a drive device embodying the invention acts to accelerate the armature means out of its rest position when a current flows in the electromagnet winding. This assists in the change of state of the device.

Shifting the armature from one rest position to the other is achieved by causing an electric current to flow in the energising winding of the electromagnet, which is located so as to influence the flux linking the poles and the armature. Two such windings may be provided

The armature is generally formed from magnetisable material, typically a ferro-magnetic material. In order to reduce the armature mass, a split form of construction may be employed in which stationary ferro-magnetic poles are located at opposite ends of the drive with a relatively small gap between the opposed poles, and the armature (also formed from magnetisable material) is designed so as just to fit in the small gaps between the opposed pole faces at the opposite ends of the drive, and the armature itself is secured to one end of a connecting rod which extends through one end of the magnetic drive to terminate externally of the drive as a valve closure member.

The armature may simply comprise small piece of ferro-magnetic material forming a solid extension of the connecting rod.

The connecting rod, can be hollowed so as to reduce its mass and rod is preferably formed from non-magnetic material.

By reducing the mass of the armature in this way, the operating speed of the device (and any valve associated therewith) can be increased considerably relative to an arrangement in which a more massive armature is employed under the influence of the same magnetic field gradient.

A magnetic drive device as aforesaid may serve to operate a valve for controlling the flow of gas or air or liquid or provide the movement necessary to open and close electrical contacts of an electrical switch.

A magnetic drive device as described may be combined with a chamber to or from which fluid can flow depending on the position of the valve closure member relative to a valve seating surrounding an opening, which in one rest position of the armature is closed by the valve closure member, and in the other rest position of the armature is unobstructed by the valve closure member.

In such arrangements it may be necessary to ensure that there is no chance of leakage of the fluid (which may be gas or liquid), into the device. This is particularly important where a flammable or explosive gas or liquid is involved. To this end the opening through which the connecting rod extends, between the magnetic drive and the valve closure member, may be sealed with one or more seals to prevent the escape of fluid (gas or liquid) from the chamber.

More preferably a diaphragm seal may be provided, instead of or in addition to sealing means surrounding the connecting rod, and the diaphragm material is selected so as to be impervious to the fluid to be controlled and is sufficiently flexible to permit linear movement of the connecting rod in response to movement of the magnetic armature.

In a preferred arrangement the diaphragm is generally circular in shape, includes a corrugated annular region to provide flexibility and permit movement of its central region relative to the circumference thereof, and is centrally perforated to allow the connecting rod to extend therethrough, but is sealed around the connecting rod, typically to a collar on the rod, the collar forming an integral part of, or being sealingly fitted to, the rod, and the periphery of the diaphragm is likewise bonded or otherwise sealingly joined to a larger diameter collar which is sealingly joined or integrally formed with an end wall of the magnetic drive assembly, which forms at least part of one wall of the fluid chamber into which the connecting rod and valve closure member extends.

An array of a plurality of bistable flow control valves may be provided associated with orifices which differ in size, and control means selects different ones of the orifices to be open, either alone, or in combination with others.

Preferably the different areas of the orifice openings which can be obtained, constitute each of a sequence of opening areas such that a progression of areas from zero to a maximum area value (when all the valves are open), can be obtained in a series of discrete steps.

A plurality of magnetic drive devices as aforesaid may be employed to open and close each of a corresponding plurality of valve closure members for controlling the exit of fluid under pressure from a manifold constituting a reservoir thereof, and the electromagnet winding of each drive is selectively connectable to a source of electric current, and programmable control means may be provided to establish connections to the source of current and the direction of current flow in the windings. The control means may be under computer control, programmable to open and close the valves in a sequence, or in one or more patterns, or in a sequence of patterns.

Each valve may be associated with an orifice through which fluid such as gas or air can pass when the valve is opened.

The orifices may be equally spaced apart in a single line, or in a plurality of lines or in a regular pattern or series of patterns or pseudo randomly. The spacing between the orifices in the lines, and between the lines, may be the same, the lines may be parallel and the locations of the orifices along the lines may be such that they align in directions perpendicular to the parallel lines, so as to define a matrix of rows and columns of equally spaced apart orifices.

The orifices may exist in a flat plane such as in a large flat plate forming one wall of a manifold containing a fluid.

Preferably the fluid is air, under pressure.

The angle of the plane to the horizontal may be such as to define a support surface for objects located thereon.

The programmable control means may be programmed so as to cause air to be released by orifices below an object, situated thereover, so that the object will be lifted on a cushion of air. Once so lifted, the object can be moved freely, possibly without friction, across the surface.

By providing sensors to detect which of the orifices are in registry with the object and controlling the electrical connections to the electromagnet windings of the valve drives so as to continuously close valves not in registry with the object and open those that are, so the load supporting cushion of air can be made to travel with an object as the latter moves relative to the orifice. By so controlling the valves, air is only permitted to exit through orifices required to generate the load supporting air cushion, and the air flow through the orifice array is significantly reduced relative to air cushion support platforms in which air escapes continually from all the orifices.

An air cushion generating platform constructed to operate as aforesaid also generates less noise than one in which the air is released continuously from all the orifices.

It has been proposed to reduce the air loss from conventional air cushion generating platforms by providing each orifice with a normally closed air check valve, each operable into an open condition by the weight of an object located thereover, due to the downward thrust of the weight acting on vertically protruding probes linked to the valves.

An air cushion support platform constructed to operate in accordance with the invention has the advantage that the valves are individually controllable via the programming, there are no probes protruding upwardly from the surface of the platform, and there is no need for any physical contact between the underside of the elevated object and any part of the platform, once the air cushion has been generated therebelow.

The matrix of orifices may be located in two or more planes, which may be at right angles.

An air cushion conveyor may be constructed using a platform as described which extends in the direction along which objects are to be conveyed, and guides above the surface of the platform define a route therealong for the said objects, which when sensed, are elevated by the air released from thereunder.

The guides may also communicate with the manifold and have orifices therein.

In an alternative arrangement, the orifices may be arranged around a curved surface, and in particular may be in the wall of a passage in a manifold to which fluid under pressure is supplied, and a programme is run on the computer controlled valve opening and closing control means to release air from different ones of the apertures so as to generate a sound wave within the passage.

The latter may be cylindrical or rectangular in cross-section.

The manifold may be annular and have an array of orifices in the internal surface defining the opening therethrough, each controlled by a magnetic drive controlled valve as aforesaid.

The manifold may comprise part of the wall of a passage through which gases or air pass and by controlling the valves pulses of fluid can be injected into the flow of air or gas, so turbulence in the flow can be created or reduced as desired. The fluid is typically compressed air or gas.

Such an annular manifold may form part of the wall of the inlet or outlet of a turbine, or the exhaust or inlet of a jet engine, or the wall of a pipeline carrying gas or air, which may be subject to turbulence.

The invention will now be described by way of example, with reference to the accompanying drawings in which:
Figure 1 is a cross-section through a magnetic drive which can be bistable or monostable depending on whether or not a flux short-circuiting element is in position;
Figure 2 illustrates a similar arrangement to that of Figure 1, but in which the armature is split into a number of parts most of which are stationary so as to reduce the mass of the moving part of the armature;
Figure 3 is a further cross-section through a device similar to that of Figure 1 in which electromagnetic means is provided for holding the movable armature in a position from it would normally move as a result of the reduction in magnetic flux by movement of the flux short-circuiting device;
Figure 4 illustrates the arrangement of Figure 3 in which the electromagnetic holding device has been disabled allowing the armature to shift to the other end of the drive;
Figure 5 shows the magnetic flux pattern of two magnets without a flux short circuiting device bridging one end of the magnets;
Figure 6 shows the effect of short circuiting the flux at one end of the magnet assembly, thereby creating only one stable position for a magnetisable armature located between the two magnets;
Figure 7 is a schematic diagram of a drive for a fluid control valve, in which the device is a balanced magnetic drive having two stable equilibrium positions;
Figure 8 illustrates how a number of such valves can be arranged to provide digital control of gas flow, in series with a monostable fail-safe valve;
Figure 9 is a diagrammatic illustration of a bistable magnetic drive, which incorporates two magnets,
Figure 10 is a similar illustration of a two-magnet bistable magnetic drive,
Figures 11 and 12 are similar views of the embodiment shown in Figure 10, showing the armature in its two bistable positions wherein the armature short-circuits pairs of electrical contacts at opposite ends of its travel and converts the drive into a relay;
Figure 13 is a similar view of another bistable embodiment, in which only a single magnet is required, and wherein the armature is again shown cooperating with pairs of contacts to perform the function of a relay;
Figure 14 is a further bistable embodiment constructed so as to more precisely route the magnetic flux available from the permanent magnets;
Figure 15 is a modification of the Figure 14 arrangement in that a flux concentrator is provided which if moved close enough to the balanced magnetic circuit, will introduce imbalance in the flux pattern so as to introduce optionally (for example in a power failure mode) monostability into the operating characteristics of the device;
Figure 16 is a further modification of the Figure 14 arrangement in which the flux concentrator is located permanently in a flux unbalancing position, to create a monostable drive device.
Figure 17 is a cross-section through a matrix array of orifices controlled by valves opened and closed by magnetic drives,
Figure 18 is a plan view of part of the array of Figure 17;
Figure 19 illustrates a control system for a valve controlled matrix array of orifices incorporating magnetic drives; and
Figure 20 illustrates a magnetic drive device and valve which includes springs at opposite ends of the armature travel in accordance with the invention.

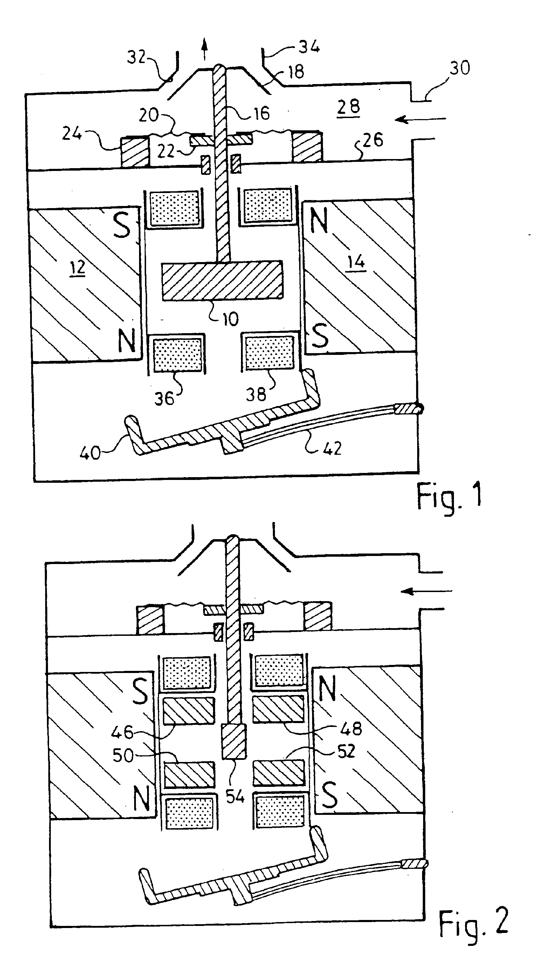

In Figure 1 an armature 10 is movable between the poles of a pair of magnets 12 and 14 arranged so as to produce two opposed fields at opposite ends of the travel of the armature. The latter is attached to a rod 16 to the upper end of which is attached a valve closure member 18. A diaphragm seal 20 extends between a collar 22 around the rod 16 and a second collar 24 attached to a wall 26 between the chamber 28 to which gas or liquid can be supplied via inlet opening 30 and which can exit when the valve closure member 18 is in the position shown displaced from a valve seat 32, by escaping through the outlet 34.

The armature 10 will attempt to align with one or the other of the two cross fields of the upper or lower end of the its travel and can be induced to move from one end to the other by passing a current through windings 36 and 38 in one direction or the other so as to either reinforce the flux at one end or reinforce the flux at the other.

Since reinforcement of magnetic flux in one of the cross fields will automatically reduce the flux in the other field, the effect of the current in the windings 36 and 38 will be to generate a flux gradient from one end of the armature travel to the other and the latter will tend to move towards the position of maximum flux density.

Since the device has a bistable characteristic, it is only necessary to supply a pulse of energy to the coils 36 and 38 to produce the flux gradient, and therefore the transition of the armature from one end to the other. Once the armature has moved into the position of maximum flux density, it will remain there, even if the current ceases to flow in the windings 36 and 38, which re-establishes the two cross fields as they were. The reason for this is that there is no tendency for the armature to move across the region of lower flux density between the two cross fields and it will tend to remain in one or the other of the two extreme positions at the top or bottom of its travel.

As shown in Figure 1, the armature is actually mid-way between its two extreme positions.

A flux concentrator and therefore short circuiting device 40 is mounted on a piezo bender 42 or a bi-metal strip such that the supply of appropriate electrical energy (potential or current) to the device 42 will cause the latter to be bent in the manner shown in Figure 1 thereby holding the device 40 away from the end of the magnet 12 and 14.

In the event of the voltage or current failing, the piezo bender or bi-metal strip 42 will tend to straighten causing the device 40 to move closer to the two opposite poles of the magnets 12 and 14, and magnetic flux will tend to be attracted to two poles 44 and 44' and will be concentrated into the structure of the device 40 if the latter is formed from magnetisable material. Typically it is formed from a ferro-magnetic material or other suitable magnetisable material.

The effect of the flux attraction will be to induce opposite magnetic poles in the poles 44 and 44' from those adjoining them in the magnets 12 and 14 causing attraction and closure of any gap between the device 40 and the magnets 12 and 14. The device 40 will therefore tend to clamp itself onto the lower end of the two magnets 12 and 14, and most of the flux which would normally extend between the two lower poles of the two magnets 12 and 14 will be concentrated into and extend through the device 40.

The net effect is that the magnetic flux density in the cross field at the lower end of the assembly of Figure 1 will collapse to a very low level and a flux gradient will exist between the lower end of the assembly and the upper end.

If the armature 10 is already at the upper end, there will be no tendency for it to move.

If however the armature is at the lower end, the armature will tend to move up the gradient to the upper end of the assembly where the flux density is highest and to remain in that position.

Figure 2 illustrates the same arrangement as shown in Figure 1, but here the armature has been divided into four stationary parts 46 and 48 at the upper end and 50 and 52 at the lower end of the armature travel and the latter has been reduced to a small element of magnetisable material 54 which will just fit with a small gap between the elements 46 and 48 when the armature is at the upper end and between 50 and 52 when it is at its lower end of its travel.

The elements 46 to 52 essentially comprise pole piece extensions of the magnets 12 and 14.

The remaining parts of the device are as described in relation to Figure 1.

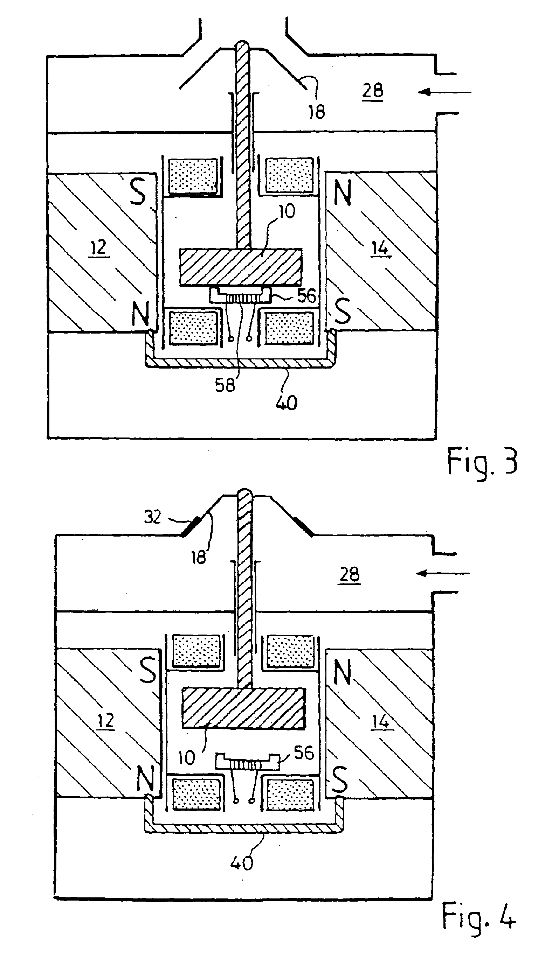

Figures 3 and 4 illustrate a modification to the Figure 1 arrangement in which electromagnet 56 having a winding 58 is located at the lower end of the armature travel to engage the armature and provide a holding magnetic flux when the armature 10 is in its lowermost position as shown in Figure 3.

The holding flux will only exist whilst a current flows in the winding 58, and to this end a current source exists to supply an appropriate current in the winding 58. If the latter is made up of a large number of turns of thin wire, only a very small current is needed to generate sufficient flux to hold the armature 10 against the pole pieces of the solenoid 56 and provided no air gap is introduced between the pole pieces and the armature 10, the closed path provided for the magnetic flux will hold the armature in the lower position as shown in Figure 3.

In the event that the current flowing through winding 58 falls to a low value or collapses completely, the holding flux will also collapse and if a flux gradient exists in the region between the two magnets 12 and 14, the armature will move to the position of maximum flux density.

This movement is demonstrated in Figure 4 in which the current in the solenoid winding 58 has been reduced to zero thereby enabling the armature to move to the upper end of the region of its travel where the flux density between the two magnets 12 and 14 is maximum.

The flux gradient will only exist in the event that the flux concentrator or short circuiting device 40 is located in contact with the lower ends of the magnets 12 and 14 as shown in Figures 3 and 4. The provision of this flux concentrating/ short circuit device as a permanent or semi-permanent part of the assembly is an essential ingredient if the device is to be a monostable device having a home position in which the armature is at the upper end of its travel and a latched position where the armature is held at the lower end by virtue of a small current flowing in the coil 58.

Transition between the home position and the latched position is effected in the manner described in relation to Figure 1 by means of a pulse of current of appropriate polarity flowing in the windings 36 and 38 so as to reinforce the field which is otherwise reduced by the effect of the short circuiting device 40 to cause the armature to move towards the solenoid 58. Once in contact therewith, the low current flowing in the solenoid winding 58 will maintain the armature in its lower position and the device is fail-safe in that if the current in the winding 58 collapses or simply reduces considerably, the armature will be free to move back up the flux gradient to the stable home position.

In each case the stable home position corresponds to the valve closure member 18 being firmly positioned against the valve seat 32 thereby closing off the exit from the chamber 28.

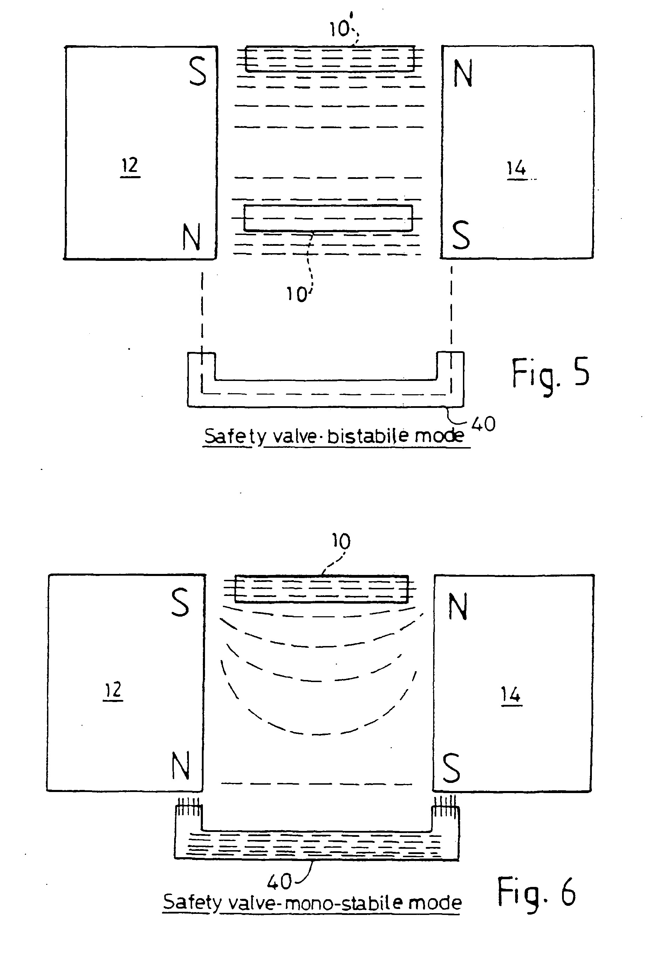

Figures 5 and 6 show the flux lines between the magnets 12 and 14 with the short circuiting magnetisable concentrate 40 displaced from the assembly in Figure 5 and close to if not in contact with the assembly as shown in Figure 6.

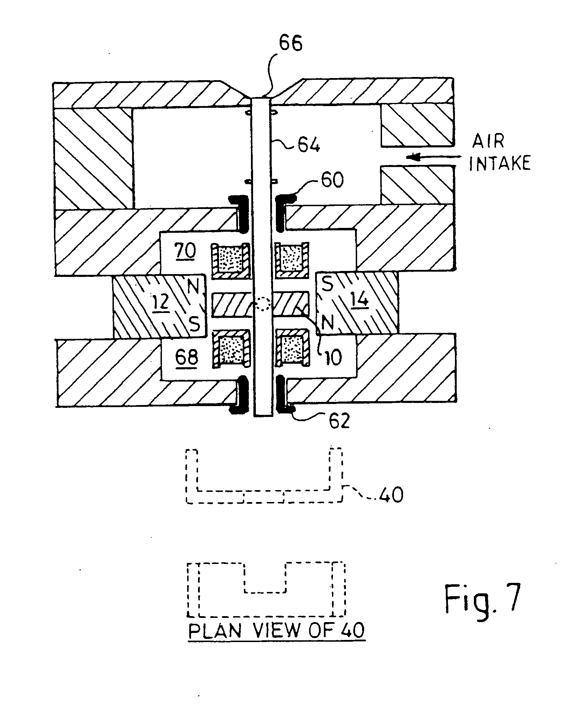

Figure 7 shows the essential parts of a bi-stable valve constructed essentially as shown in Figure 1, with seals 60 and 62 between the hollow rod 64 which terminates in the upper end with a valve closure device 66. A concentrator 40 may be located in the chamber 68 if desired so as to concentrate the flux into itself between the lower poles of the two magnets 12 and 14 as previously described to convert the device into a monostable valve. It will be seen that the concentrator 40 could be inverted and located in the other chamber 70 at the upper end of the assembly so as to reverse the flux gradient but in this event the device would not close in the event of power failure.

For the monostable operation to be successful, an additional electromagnetic device is necessary as described with reference to Figures 3 and 4 to hold the armature at the unstable end of its travel.

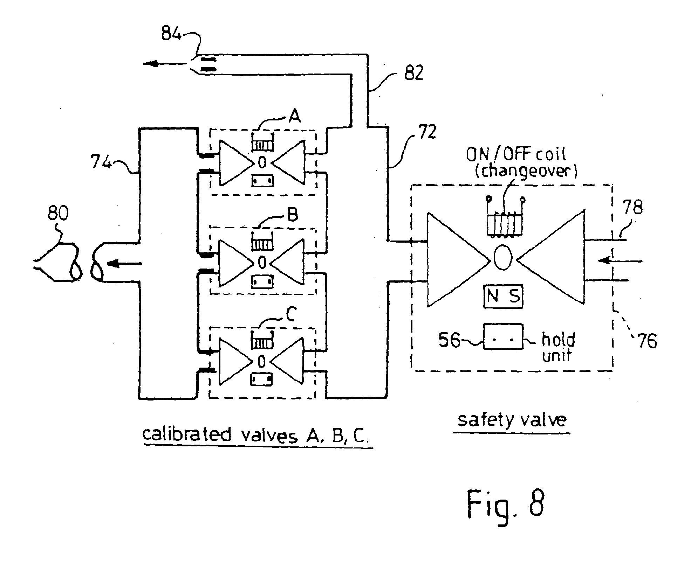

Figure 8 shows how three valves each having a different sized orifice can be arranged in parallel to provide digital control having eight discrete flow rates depending on which of the valves is open between a first chamber 72 and a second chamber 74. Each of the valves is operated by a drive similar to that shown in Figure 7 and fluid is supplied to chamber 72 via a monostable fail-safe valve such as is described in relation to Figures 3 and 4.

This valve is denoted by reference numeral 76.

The inlet to valve 76 may be gas pipe 78 supplying gas at moderate pressure for burning in a gas burner jet 80 which is supplied with gas from the second chamber 74. Depending on which of the valves A, B and C are opened, so the flow of gas to the burner 80 will be zero or maximum or any one of six different levels in between.

A small bleed pipe 82 feeds a pilot jet 84 from the chamber 72 and a bi-metal strip or other temperature sensitive device is located in the pilot flame to provide a holding current for the holding solenoid such as 56, 58 of Figures 3 and 4 as employed in the valve 76.

In the event of flame failure at the pilot light, the current in the holding device collapses and valve 76 closes.

As a safety measure, circuit means may be provided sensing the current in the holding device for valve 76 such that if this current fails, a current pulse is supplied to each of valves A, B and C to close each of these valves off.

Any number of valves such as A, B, C may be employed, the more that are employed, the greater the number of possible intermediate steps which can be provided between the fully open gas flow mode and the fully closed gas flow mode of the valves.

Figure 9 illustrates a magnetic drive formed from two permanent magnets 86 and 88, and elongate armature 90 which can either rest in the upper position as shown or in the lower position shown in dotted outline at 92. The two positions of the armature coincide with the regions of maximum flux density in the complex field between the two magnets.

It will be appreciated that approximately half way between the two positions 90 and 92, the flux density will be effectively zero and will increase sharply in the directions of arrows 94 and 96. Beyond the positions 90 and 92, the flux density will tend to fall away.

The two positions 90 and 92 are therefore positions of equilibrium, albeit relatively unstable equilibrium in that if the armature is in one position, and is moved towards the other position by external means, there will become a point in time in which the influence of the magnetic flux associated with the other position will exceed that of the field from which the armature is moving and the latter will be attracted into the said other position.

Movement of the armature can be effected magnetically by locating an electromagnetic winding 98 between the two magnets 86 and 88. Passing a current through the winding in one sense will increase the magnetic flux density in the upper field and reduce the flux density in the lower field thereby shifting the position of zero flux density towards the lower field if not into and beyond the lower field depending on the flux density produced by the electrical magnet. Reversing the direction of current flow will reverse the effect on the flux in the upper and lower fields and shift the position of zero flux to the region of the upper field if not beyond it.

The net effect is to create a flux gradient extending from one armature position to the other depending on the direction of the current flow in the electromagnet 98 and the armature will always tend towards the region of higher flux density.

Once the armature has been moved from one field position to the other field position, current is no longer required to flow in the electromagnet to maintain the armature in the new position since on the collapse of the current, the flux pattern between the two magnets will be restored and the position of zero flux will again be located approximately midway between the armature positions causing the armature to remain in the position into which it has been moved.

The flux produced by the electromagnet 98 can be significantly enhanced by locating magnetic concentrators 100 and 102 externally of the electromagnet coil 98 to provide a lower reluctance path outside the coil thereby effectively matching the low reluctance path within the coil (caused by the presence of the armature) and thereby increasing the flux available within the electromagnet to influence the magnetic fields between the two magnets 86 and 88.

The external concentrators 100 and 102 also attract flux from the permanent magnets 86 and 88 and by virtue of the magnetisation of the armature and the concentrators 100 and 102 by the permanent magnet fields and the flux generated by the flow of current in the electromagnet 98, the flux gradient from one end of the armature travel to the other is significantly enhanced, thereby improving the changeover characteristic of the drive for a given flow of current in the electromagnet 98.

Figure 10 illustrates a further refinement of the arrangement shown in Figure 9 in which the armature 90 is now replaced by a shorter element 104 which as shown is in its midway position between the two ends of its travel denoted by the rectangular dotted outlines 106 and 108. The magnetic flux from the magnets 86 and 88 is concentrated into upper and lower air gaps at opposite ends of the armature travel by means of two pairs of pole pieces 110 and 112, and 114 and 116. Elongate concentrators 100 and 102 are also provided externally of the switching coil/electromagnet 98.

The device operates in exactly the same way as described in relation to Figure 9, except that the armature is now less massive and requires effectively less energy to shift it from position 106 to 108 and vice versa. This means that the flux required to be generated by the electromagnet 98 can be reduced or for a given electromagnet and current, the force acting on the armature is considerably greater than would otherwise be the case leading to a more reliable operation of the drive or enabling greater force to be exerted from the armature to an external element which is driven by the armature.

Pole pieces 110 to 116 serve to concentrate flux in the two fields between the two permanent magnets into the upper and lower central air gaps and serve to better define the position of zero flux midway between those two air gaps in the non-energised condition of the coil 98.

The external flux concentrators 100 and 102 serve to enhance the flux available on energisation of the electromagnet coil 98 as previously described.

Either of the arrangements shown in Figures 9 and 10 can be adapted to form an electrical switch by providing electrical contact adjacent one or both of the positions of the armature and by forming the armature from electrically conductive material or mounting on or coating on the armature electrically conductive material which completes an electrical circuit between the contacts when the armature occupies the position adjacent the contacts.

Contacts may be provided at both ends of the armature travel so that two different electrical circuits are made depending on whether the armature is at one end or the other of its travel.

Figures 11 and 12 illustrate the Figure 10 arrangement in which the armature 104 has conductive elements 118 and 120 located on opposite faces for making contact with a first pair of contacts 122, 124 at the lower end of its travel and a second pair of contacts 126, 128 at the upper end of its travel.

The armature 104 is shown in its upper position in Figure 11 and in its lower position in Figure 12.

It is to be understood that two permanent magnets such as 86 and 88 are not required and a drive can be constructed from single magnet such as 86 and a flux return member 130 as shown in Figure 13. This comprises the arrangement of Figure 12 in which the magnet 88 is replaced by the flux returning member 130. With no current flowing in coil 98, the flux from permanent magnet 86 will induce North and South poles as shown in the various magnetisable elements making up the circuit and armature 120 will remain in the lower position as shown.

Introducing a current of sufficient magnitude into the coil 98 will enhance the flux density between the upper pole pieces 110 and 112 and reduce if not eliminate flux between the pole pieces 114 and 116 causing the armature 120 to shift from the lower position shown to the upper position such as is designated in Figure 11.

It will be seen that the second magnet 88 serves no purpose other than to reinforce the flux density in the air gaps between the pole pieces at opposite ends of the armature travel, and by providing a low reluctance path as by an elongate magnetisable member 130 in place of the second magnet 88, the flux pattern within and operation of the drive remains unchanged.

Although an arrangement incorporating a single magnet is shown in conjunction with an armature having conductive 118 and 120 for cooperating with contacts as described in relation to Figures 11 and 12, it is to be understood that the single magnet drive is applicable to any arrangement including monostable arrangements as described herein.

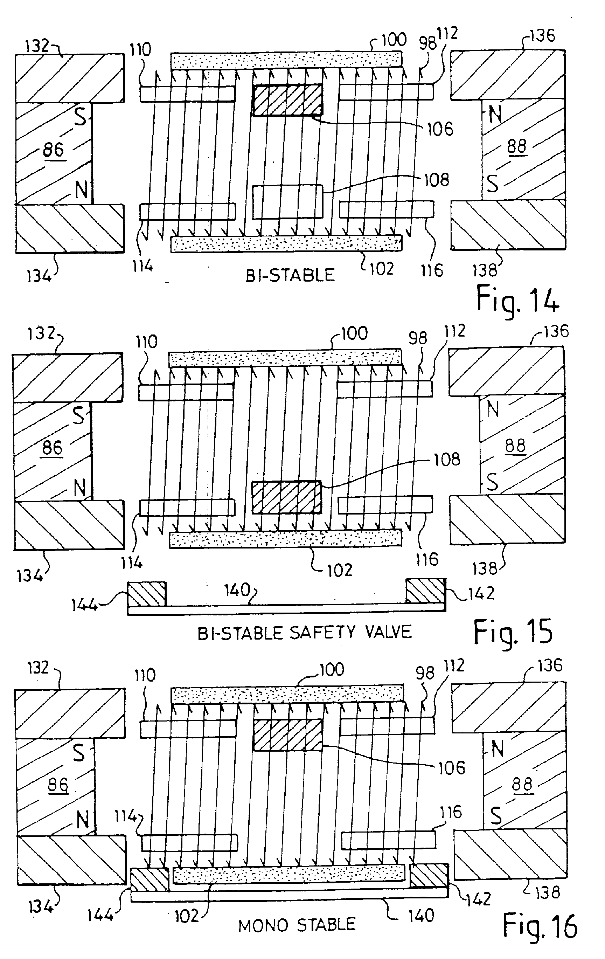

Since the flux emanating from the magnets 86 and 88 will tend to issue from the end faces of the magnets, a practical arrangement preferably includes pole pieces at the ends of the magnets (or in the case of a single magnet arrangement, at the end of the magnet 86 and at the end of the flux returning device 130) which extend laterally towards the armature and pole piece assembly within the electromagnet as shown in Figures 14, 15 and 16.

For simplicity a two magnet drive is shown based on the Figure 11 arrangement and the armature shown at 104 is in its upper rest position at one end of its travel. An outline position at 105 denotes the other stable position for the armature. Similar reference numerals have been incorporated as used in Figures 10, 11 and 12 to denote the same items.

Laterally extending pole pieces 132 and 134 are provided at the opposite ends of the magnet 86 and similar pole pieces 136 and 138 are provided at opposite ends of the other magnet 88. The pole pieces provide a low reluctance path for flux linking the magnets 86 and 88 with the other magnetisable members of the magnetic drive and this increases the flux density available to the drive from any given pair of magnets 86 and 88 (or single magnet 86).

The arrangement shown in Figure 14 is a bistable arrangement since it is wholly symmetrical and the armature will remain in either the upper position at 106 or the lower position 108 as described in relation to Figure 10, until triggered to move from one position to the other by an appropriate current flow in the electromagnetic coil 98.

The arrangement shown in Figure 15 is a bistable drive which can be modified in an emergency to adopt a monostable characteristic by introduction of an external flux concentrating element 140 having pole pieces 142 and 144 which can be introduced between the pole pieces 134 and 138 and the external flux concentrating element 102 so as to significantly concentrate most of the flux which would otherwise link the armature (if in position 108 as shown), and lower pole pieces 114 and 116, whilst leaving the flux linking the other pole pieces 110 and 112 virtually unchanged. The flux gradient so produced will accelerate the armature 108 into the upper position 106 shown in Figure 14 and the armature will tend to remain in that position all the time element 140 is located with its pole pieces 142 and 144 between the two magnets.

Passing an appropriate current through the electromagnetic coil 98 can overcome the flux short-circuiting effect of the element 140 to enable the armature 108 to be moved to the lower position while the current flows, but it will be seen that as soon as the current fails, the armature 108 will revert to the upper position for the reasons indicated above.

Figure 16 shows the element 140 located in its proximate position between the poles 134 and 138, and demonstrates how the armature will normally adopt the upper position 106 when the element 140 is so positioned.

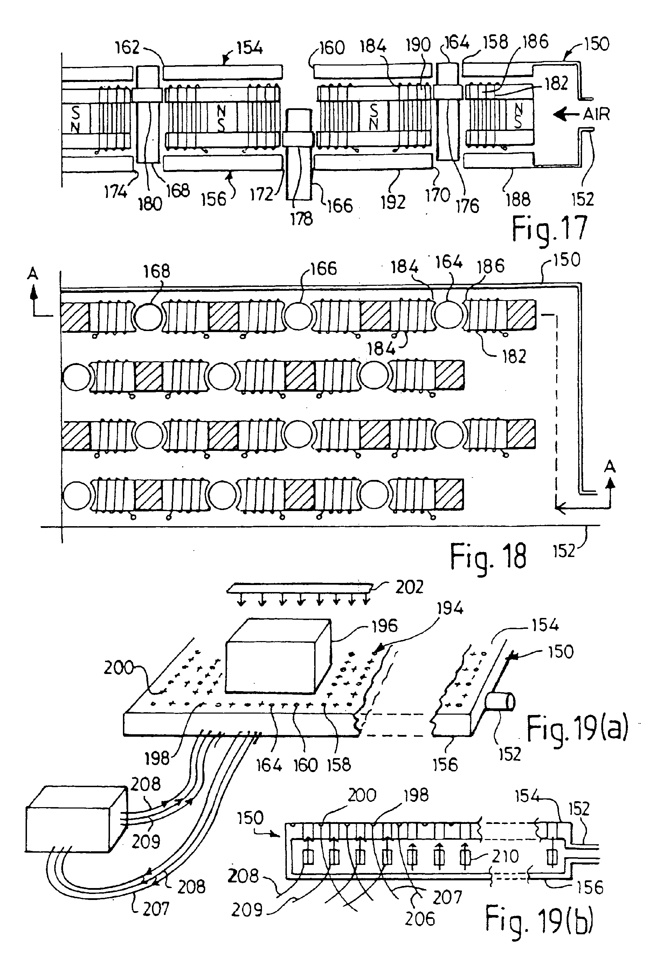

Figure 17 shows a manifold 150 having an air inlet 152, an upper flat wall 154 and lower parallel wall 156 and a plurality of orifices 158, 160, 162, through which air can escape if open, but which can be closed by closure members 164, 166, 168 respectively if the latter are moved into their upper position (as shown for 158 and 162 respectively). Sealing (not shown) is provided between the closure members and the corresponding openings 170, 172 and 174 through which the lower ends of the closure members 164, 166, 168 can protrude (as does 166), when they are in their lowered position.

Similar sealing (not shown) is provided between the upper ends of the closures 164, 166 etc and the openings 158, 160 etc.

Each closure 164, 166 etc includes an integral magnetic armature 176, 178, 180 respectively, and the rest of the closure comprises a lightweight hollow tube of plastics material, or the like.

Each closure is movable into one or the other of its two stable positions by causing a short pulse of electric current of appropriate polarity to flow in windings such as 182, 184, around magnet poles such as 186, 188, and 190, 192 forming a magnetic drive device, and one such device is provided for each of the closures.

A plan view of the arrangement of Figure 17 (with uper wall 154 removed) is shown in Figure 18, and the line AA shows the section line used for producing Figure 17.

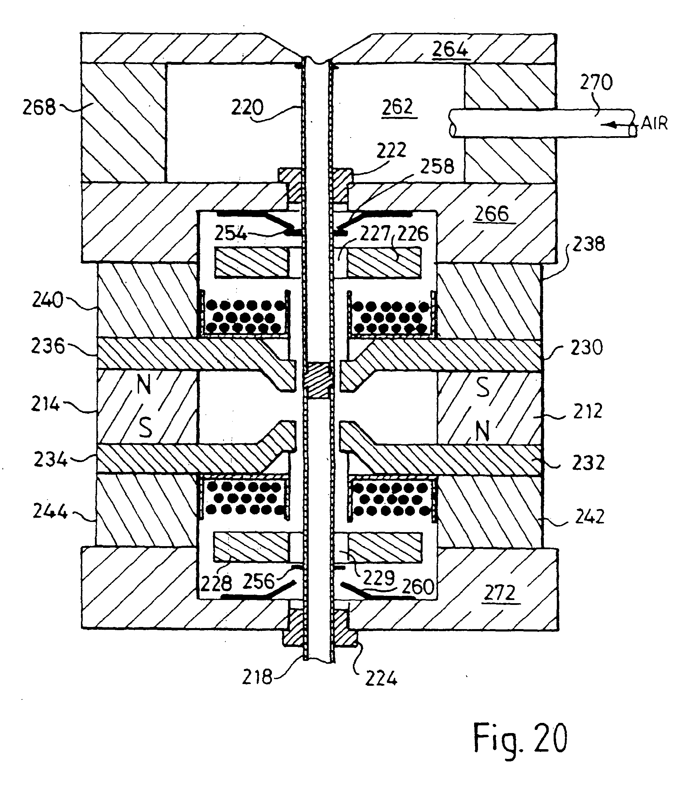

A perspective view of the arrangement is shown in Figure 19 in which the array of orifices 158, 160, 162 in the top surface 154 are denoted by reference numeral 194, and a rectilinear block of material 196 is shown located on the surface 154.

Air escaping from orifices in the array 194, below the object 196, creates a cushion of air which will elevate the block 196, and create an air bearing, permitting block 196 to be moved freely and without significant friction force, or contact with the surface 154.

The opening and closing of the orifices 154 is controlled by signals from light sensors (such as photodiodes) located in a similar matrix array between the orifices 194. One of these sensors is identified by reference numeral 198 and another by 200. A light source 202 above the surface 154 will normally illuminate all the sensors, and the signal produced by the sensors in that event is arranged to shift all the closures (such as 164) into their upper positions, to close off their respective orifices 158, 160 etc.

If an object such as block 196 is located over some of these sensors, as shown, light is inhibited from reaching those sensors, and the signals from these sensors are decoded and used to shift the closures of the orifices associated with the sensors in the group, into their lower positions. This opens the related orifices and permits air to escape below the block, and create an air cushion to lift the block out of contact with the surface 154.

By interrogating the sensor output signals continuously, or repetitively at a high rate, any lateral movement of the block can be rapidly ascertained, and the relevant closures moved to close off exposed orifices and open any now below the block.

A computer based control device 204 receives signals from each of the sensors 198, 200 etc along separate data paths 206, 207 etc. Operating currents for (or signals to cause current to flow in) the coils (such as 182, 184) of selected magnetic drives linked to orifice closures (164) etc, are supplied to the drives along current paths/data paths 208, 209 etc.

Figure 19(b) is a scrap section through the manifold 150, and shows the sensors (198, 200 etc), orifices (158, 160 etc) and closures (158, 160 etc).

Current/data paths (206, 207 and 208, 209 are exemplified by similar reference numerals as were employed in Figure 19(a). One of the magnetic drives is described by reference numeral 210.

Figure 20 is a cross-section through a pneumatic valve assembly operated by a magnetic drive device embodying the invention. This comprises two permanent magnets 212, 214, an armature 216 and hollow light weight aligned tubular extensions 218, 220 thereto which are guided in sleeve seals 222, 224. External magnetic shunts are provided at 226, 228. These are apertured at 227 and 229 to permit the extensions 218, 220 to extend therethrough. Four internal polepieces are provided at 230,232, 234 and 236. Four magnet extensions are provided at 238, 240, 242 and 244 and two electromagnet windings are located around the internal polepieces as denoted by 246, 248.

A ring seal 250 partially engaged in an annular groove (not shown) in the exterior of the tube 220 serves to fully close off the orifice 252 when the armature is in its upper position (not shown), by engagement with the lower rim of the orifice 252.

The armature extensions 218, 220 carry radial flanges at 254, 256 which can engage dished annular springs 258, 260 respectively. The positions of the flanges 254, 256 relative to the armature travel and the springs 258, 260, are selected so that the latter are just engaged and compressed as the armature reaches its upper and lower rest positions respectively as determined by the magnet polepieces 230, 236.

A chamber 262 is shown at the upper end of the assembly having upper and lower walls 264, 266 and an encircling side wall 268 which extends coaxially around the tube 220.

This wall includes an inlet orifice through which a gas supply pipe 270 extends to convey gas (eg air) under pressure to the chamber 262.

The assembly is completed by a baseplate 272 which supports the lower spring 260 and the sleeve seal 224.

Conductors for conveying energising current to the windings 246, 248 etc, are not shown.

## Claims

1. A magnetic drive device formed from permanent magnet means generating magnetic flux between pairs of poles, armature means mounted for movement enabling it to occupy rest positions between the poles, and at least one electromagnet winding whose axis is generally perpendicular to the path of movement of the armature which when electric current flows therein produces a magnetic flux in one direction or the other, depending on the direction of the current, the flux from the energised winding causing the armature either to remain in its current rest position or to move into its other rest position, in which the armature will continue to remain after the current flow ceases, **characterised by** resiliently deformable energy storing means which is deformed in response to movement of the armature means as the latter approaches its rest positions, thereby to absorb and store energy from the final part of the movement of the armature into each rest position.

2. A magnetic drive device as claimed in claim 1 wherein the energy storage means becomes disengaged from the armature means as the latter moves away from each rest position.

3. A magnetic drive device as claimed in claim 1 adapted to control the position of a valve closure member, or the movable member of an electrical switch, effecting closure or opening of the contacts thereof.

4. A magnetic drive device as claimed in claim 1 in combination with and adapted to operate a fluid flow control valve.

5. A magnetic drive device and valve combination as claimed in claim 4 when combined with a plurality of similar said combinations, for controlling the flow of fluid from a common manifold.

6. A combination as claimed in claim 5, wherein each valve controls the flow of fluid through an orifice and control means is provided which is under computer control, and the latter is programmable to open and close the valves in a sequence, or in one or more patterns, or in a sequence of patterns, to release fluid through the orifices in the said sequence or pattern or sequence of patterns.

7. A combination as claimed in claim 6 wherein the orifices are located in a flat plate forming one wall of the manifold containing fluid under pressure, and the flat plate constitutes a platform on which in use an object can be placed and the control means opens and closes the valves to release fluid through orifices below the object to form a cushion of air to lift the object and allow the latter to move freely over the platform.

8. A combination as claimed in any of claim 6, wherein the orifices are located in a curved wall of a passage which extends through a manifold containing fluid under pressure, and the control means opens and closes the valves to release fluid through different ones of the orifices in the passage wall.

9. A combination as claimed in any of claims 4 to 8 in which the fluid is gas or air.

10. A combination as claimed in any of claims 6 to 9 wherein the control means is programmed to open and close the valves so as to selectively inject pulses of gas or air into the gas or air flow in the passage, to control turbulence in the flow.

11. A combination as claimed in claim 10 wherein the passage comprises or forms part of the wall of an inlet or outlet of a turbine, or the wall of the exhaust or inlet of a jet engine, or the wall of a pipeline carrying gas or air.
